# EUROPEAN PATENT APPLICATION

(11) **EP 4 742 273 A1**
(43) Date of publication of application: **13.05.2026**
(21) Application number: 24835259.3
(22) Date of filing: 25.06.2024
(51) Int. Cl.: G21D 3/08, H02J 3/24, G21D 3/00, G21D 3/10, G05B 19/04

(54) **REACTOR POWER CONTROL METHOD AND APPARATUS, COMPUTER DEVICE AND READABLE STORAGE MEDIUM**

(30) Priority: 05.07.2023 CN 202310817879
(71) Applicant: China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: ZHANG, Rongbin, Shenzhen, Guangdong 518031 (CN); GUO, Yongfei, Shenzhen, Guangdong 518031 (CN); XIONG, Guohua, Shenzhen, Guangdong 518031 (CN); LI, Tao, Shenzhen, Guangdong 518031 (CN); LI, Guomin, Shenzhen, Guangdong 518031 (CN); LANG, Yukai, Shenzhen, Guangdong 518031 (CN); SHI, Bo, Shenzhen, Guangdong 518031 (CN); DU, Yangyang, Shenzhen, Guangdong 518031 (CN); LIN, Wenzhao, Shenzhen, Guangdong 518031 (CN); ZHOU, Wenjun, Shenzhen, Guangdong 518031 (CN); HE, Xiaoming, Shenzhen, Guangdong 518031 (CN)
(74) Representative: V.O.
(86) International application number: PCT/CN2024/101394
(87) International publication number: WO 2025/007778

(57) **Abstract**

The present application relates to a reactor power control method and apparatus, a computer device and a readable storage medium. The method comprises: acquiring an initial load signal sent by a power grid; preprocessing the initial load signal to obtain an actual load signal; acquiring first feedforward information on the basis of the actual load signal and a preset load-rod position model; acquiring second feedforward information on the basis of the initial load signal, the actual load signal and a preset deviation intensity adjustment model; acquiring third feedforward information on the basis of the actual load signal and a preset amplitude limiting model; and generating a power control signal on the basis of the first feedforward information, the second feedforward information, the third feedforward information and an actual rod position value of a control rod of a reactor.

## Description

### CROSS-REFERENCE TO RELATED APPLICATION

The present application claims priority to Chinese patent application No. 2023108178798, entitled "Reactor power control method and apparatus, computer device and readable storage medium", filed on July 5, 2023, the disclosure of which is hereby incorporated by reference in its entirety.

### TECHNICAL FIELD

The present application relates to the field of nuclear power technology, and in particular to a reactor power control method, a reactor power control apparatus, a computer device and a readable storage medium.

### BACKGROUND

With the continuous optimization and adjustment of energy structure, it has become an inevitable trend for nuclear power units to participate in grid frequency regulation and peak shaving, which puts forward higher requirements for the control ability of an automatic generation control (AGC) of a nuclear power unit. The operational effectiveness of the AGC function relies entirely on the regulation performance of a coordinated control system of a nuclear power unit. For the nuclear power unit, it is required to be able to quickly respond to a power command, and quickly stabilize system parameters of the nuclear power unit after the power command changes, so as to meet the requirements of frequent power changes of the nuclear power unit.

At present, "reactor follow unit" operation mode, which is also called Mode-G, is generally adopted for the operation of pressurized water reactor (PWR) nuclear power unit. In such a mode, the turbine receives a load instruction signal and automatically adjusts the steam intake to change the turbine power, and the reactor changes the nuclear power according to the load change of the turbine. That is to say, under the normal operating condition of the nuclear power unit, the power setting value signal required for reactor power control is generated according to a load reference value of the steam turbine itself. When the load reference value increases, the power setting value also increases proportionally. In this mode, although the turbine can quickly respond to a command change of an external power grid, the reactor is prone to cause load mismatch of various circuits since the reactor follows the turbine load passively, which aggravates the fluctuation of main steam pressure and may trigger the action of the reactor protection system if the fluctuation is serious.

### SUMMARY

According to various embodiments of the present application, a reactor power control method, a reactor power control apparatus, a computer device and a readable storage medium are provided.

In a first aspect, the present application provides a reactor power control method including:
obtaining an initial load signal sent by a power grid;
preprocessing the initial load signal to obtain an actual load signal;
obtaining first feedforward information based on the actual load signal and a preset load-rod position model;
obtaining second feedforward information based on the initial load signal, the actual load signal and a preset deviation intensity adjustment model;
obtaining third feedforward information based on the actual load signal and a preset amplitude limit model; and
generating a power control signal based on the first feedforward information, the second feedforward information, the third feedforward information, and an actual rod position value of a control rod of a reactor.

In an embodiment, generating the power control signal based on the first feedforward information, the second feedforward information, the third feedforward information, and the actual rod position value of the control rod of the reactor includes:
calculating a rod position setting value of the control rod of the reactor based on the first feedforward information, the second feedforward information and the third feedforward information; and
generating the power control signal based on the rod position setting value, the actual rod position value and a preset rod speed model.

In an embodiment, generating the power control signal based on the rod position setting value, the actual rod position value and the preset rod speed model includes:
calculating rod position deviation information based on the rod position setting value and the actual rod position value; and
processing the rod position deviation information based on the preset rod speed model to obtain the power control signal.

In an embodiment, preprocessing the initial load signal to obtain the actual load signal includes:
performing a rate limiting processing on the initial load signal based on a preset load changing rate to obtain the actual load signal.

In an embodiment, obtaining the first feedforward information based on the actual load signal and the preset load-rod position model includes:
inputting the actual load signal to the preset load-rod position model; and
obtaining the first feedforward information corresponding to the actual load signal via a match in the preset load-rod position model.

In an embodiment, the preset deviation intensity adjustment model includes a first sub-model and a second sub-model, and obtaining the second feedforward information based on the initial load signal, the actual load signal and the preset deviation intensity adjustment model includes:
calculating reference load deviation information based on the initial load signal and the actual load signal;
processing the reference load deviation information based on the first sub-model to obtain reference rod position feedforward information, wherein the reference rod position feedforward information is a rod position adjustment value, and the rod position adjustment value is obtained by adjusting the reference load deviation information according to a preset deviation intensity range; and
performing a preset inertia processing on the reference rod position feedforward information based on the second sub-model to obtain the second feedforward information.

In an embodiment, obtaining the third feedforward information based on the actual load signal and the preset amplitude limit model includes:
performing a differential calculation on the actual load signal to obtain a change rate of the actual load signal; and
limiting an amplitude of the change rate based on the preset amplitude limit model to obtain the third feedforward information.

In a second aspect, the present application provides a reactor power control apparatus including:
an initial signal obtaining module configured to obtain an initial load signal sent by a power grid;
an actual signal obtaining module configured to preprocess the initial load signal to obtain an actual load signal;
a first feedforward calculation module configured to obtain first feedforward information based on the actual load signal and a preset load-rod position model;
a second feedforward calculation module configured to obtain second feedforward information based on the initial load signal, the actual load signal and a preset deviation intensity adjustment model;
a third feedforward calculation module configured to obtain third feedforward information according to the actual load signal and a preset amplitude limit model; and
a control signal generation module configured to generate a power control signal according to the first feedforward information, the second feedforward information, the third feedforward information, and a actual rod position value of a control rod of a reactor.

In a third aspect, the present application further provides a computer device. The computer device includes a memory and a processor. The memory has a computer program stored thereon. The processor, when executing the computer program, performs steps of the reactor power control method according to the first aspect.

In a fourth aspect, the present application further provides a computer readable storage medium. The computer readable storage medium has a computer program stored thereon. The computer program, when executed by a processor, performs steps of the reactor power control method according to the first aspect.

The details of one or more embodiments of the present application are provided in the accompanying drawings and the description hereinafter, so that other features and advantages of this application will become apparent from the description, drawings, and claims.

### BRIEF DESCRIPTION OF THE DRAWINGS

In order to more clearly illustrate the technical solutions in the embodiments of the present application or the prior art, a brief description is given below for the drawings referred in the description of the embodiments or the prior art. Obviously, the drawings in the following description are merely some embodiments of the application. For those of ordinary skill in the art, other drawings can also be obtained based on the disclosed drawings without involving any inventive effort.
FIG. 1 is a view illustrating an application environment of a reactor power control method according to an embodiment.
FIG. 2 is a schematic flow chart of a reactor power control method according to an embodiment.
FIG. 3 is a schematic diagram illustrating an initial load signal and an actual load signal according to an embodiment;
FIG. 4 is a schematic flow chart of steps of obtaining first feedforward information according to an embodiment;
FIG. 5 is a schematic flow chart of steps of obtaining second feedforward information according to an embodiment;
FIG. 6 is a schematic flow chart of steps of obtaining third feedforward information according to an embodiment;
FIG. 7 is a schematic flow chart of steps of generating a power control signal according to an embodiment;
FIG. 8 is a schematic flow chart of steps of generating a power control signal according to another embodiment;
FIG. 9 is a view illustrating an application scenario of the reactor power control method according to an embodiment;
FIG. 10 is a schematic diagram illustrating modules of a reactor power control apparatus according to an embodiment; and
FIG. 11 is a diagram illustrating an internal structure of a computer device according to an embodiment.

### DETAILED DESCRIPTION OF THE EMBODIMENTS

The technical solutions in the embodiments of the present application will be clearly and completely described with reference to the drawings of the embodiments of the present application. Obviously, the described embodiments are only some, but not all of the embodiments of the present application. Based on the embodiments of the present application, all other embodiments obtained by a person of ordinary skill in the art without involving creative efforts shall fall within the protection scope of the present application.

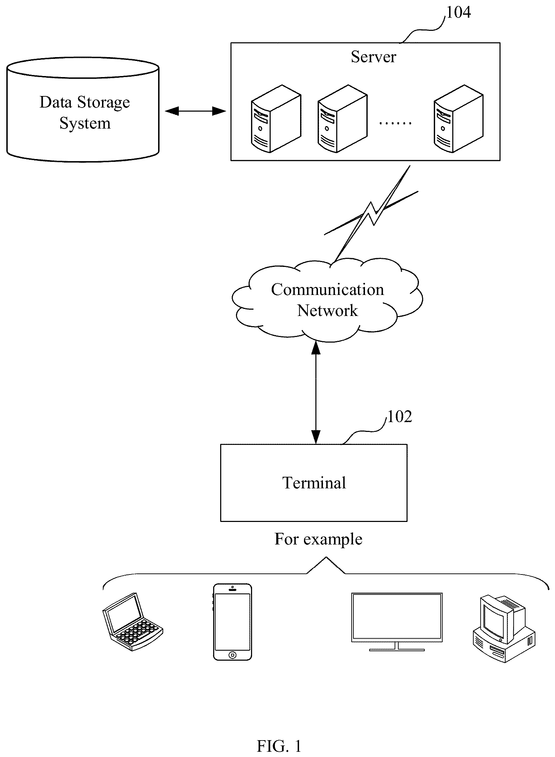

A reactor power control method provided in the embodiments of the present application can be applied to an application environment shown in FIG. 1. A terminal 102 communicates with a server 104 through a network. A data storage system can store data to be processed by the server 104. The data storage system can be integrated on the server 104 or arranged on a cloud or another network server. The terminal 102 can be, but is not limited to, a personal computer, a laptop, a smart phone and a tablet computer, and the server 104 can be implemented by an independent server or a server cluster composed of a plurality of servers.

In an embodiment, the reactor power control method provided in the embodiments of the present application is applied to a PWR nuclear power unit, for example, a PWR nuclear power unit using a once-through steam generator (OTSG). The PWR nuclear power unit includes a reactor-turbine coordinated control system. The reactor-turbine coordinated control system, when performing an automatic generation control (AGC), communicates and interacts with the power grid to receive a load instruction sent by the power grid.

An existing nuclear power unit equipped with the OTSG has a limited heat storage capacity and a slow initial responding speed, so that the load responding speed of the nuclear power unit is relatively fast when the load changes in a large magnitude, and that the load responding speed of the nuclear power units is relatively slow when the load changes in a small magnitude. If the nuclear power unit meets the requirements for a responding speed when the load changes in the small magnitude, the nuclear power unit will have a problem of an excessive load overshoot when the load changes in the large magnitude, which will affect the safety of the nuclear power unit.

In order to solve the problems of the low load responding speed of the unit and a large fluctuation of the main steam pressure caused by the relatively low heat storage capacity during the AGC of the PWR nuclear power unit equipped with the OTSG, the embodiment provides a reactor power control method to improve the regulation performance of the coordinated control system of the nuclear power unit by optimizing the feedforward loop of the power rod control.

The following embodiments may be combined with each other, and the same or similar concepts or processes may not be described repeatedly in some embodiments. The technical solutions in the embodiments of the present application will be clearly and completely described with reference to the drawings in the embodiments of the present application. Obviously, the described embodiments are only some, but not all of the embodiments of the present application.

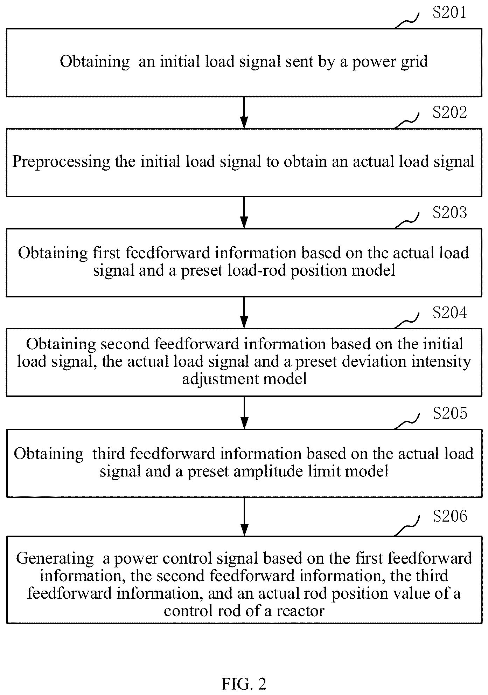

In an embodiment, as shown in FIG. 2, a reactor power control method is provided. The method, for example, is applied to an application environment shown in FIG. 1, and includes the following steps.

At step S201, an initial load signal sent by a power grid is obtained.

The initial load signal is a load instruction from the power grid received by the coordinated control system of the nuclear power unit. In a specific implementation process, a power grid dispatch center sends the load instruction to the coordinated control system according to the actual application requirements of the nuclear power unit. The specific parameters of the load instruction are not limited in this embodiment.

It should be noted that the initial load signal may also include a given load instruction set for the nuclear power unit by a unit operator and a load instruction sent by the power grid dispatch center, which are not limited in this embodiment.

In an embodiment, the initial load signal is transmitted in the form of a step signal.

At step S202, the initial load signal is preprocessed to obtain an actual load signal.

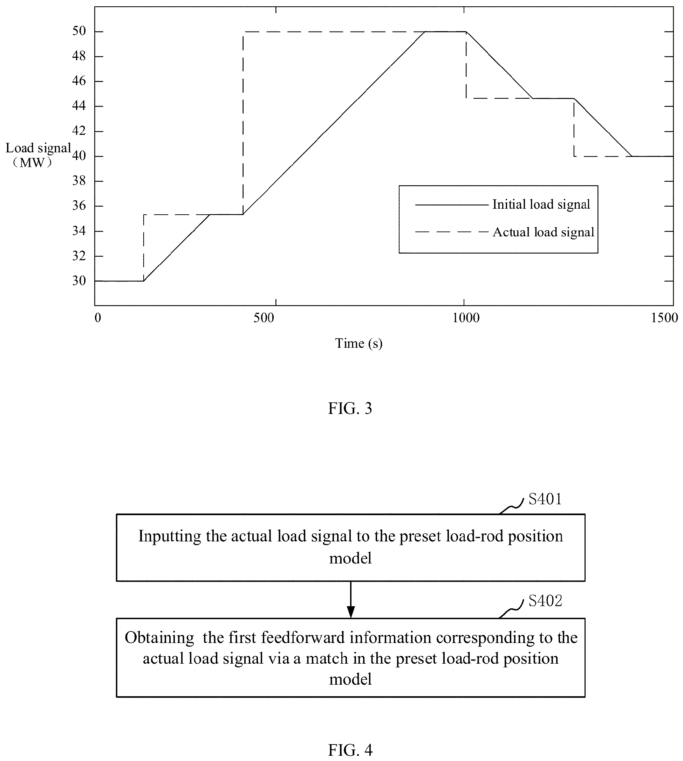

In an embodiment, as shown in FIG. 3, since the initial load signal is transmitted in the form of the step signal, a drastic change in the initial load signal will impact the equipment of the nuclear power unit, causing the oscillation of each operating parameter of the nuclear power unit. Therefore, after receiving the initial load signal, the coordinated control system needs to further perform a preset rate limiting processing on the initial load signal, so as to ensure the stability of each operating parameter of the nuclear power unit.

In an embodiment, the operating parameters of the nuclear power unit include a main steam pressure, an average temperature of the coolant in a primary circuit, a unit power, and the like.

In this embodiment, the rate limiting processing is performed on the initial load signal, which can effectively avoid oscillations in each operating parameter of the nuclear power unit, so as to keep the parameters of the equipment of the nuclear power unit stable.

In an embodiment, the step of preprocessing the initial load signal to obtain the actual load signal includes:
performing a rate limiting processing on the initial load signal based on a preset load changing rate to obtain the actual load signal.

In an embodiment, the rate limiting processing is applied to the initial load signal based on the preset load changing rate of 10% FP/min (FP represents the rated power of the nuclear power unit) to obtain the actual load signal.

It should be noted that the preset load changing rate can be adaptively adjusted according to a control requirement of the actual application scenario, and the specific value of the preset load changing rate is not limited in this embodiment.

At step S203, first feedforward information is obtained based on the actual load signal and a preset load-rod position model.

In an embodiment, when the actual load signal of the nuclear power unit is in a static state, the rod position value of a power control rod of the nuclear power unit corresponds to an actual load instruction, and the power control rod is located at a given rod position.

When the actual load signal of the nuclear power unit is in a dynamic state, the rod position of the power control rod of the nuclear power unit is adjusted in response to the dynamic change in the actual load instruction, and the rod position value of the power control rod is changed at a rate, so that the power of the nuclear power unit corresponds to the heat output of the steam generator. The rate can be set to 0-10% FP/min (where FP represents the rated power of the nuclear power unit). It should be noted that the specific value of the rate can be adaptively changed according to the actual application scenario, which is not specifically limited in this embodiment.

In this embodiment, the preset load-rod position model is configured to match a corresponding rod position value of the power control rod according to the actual load signal, that is, an input of the preset load-rod position model is the actual load signal, and an output of the preset load-rod position model is the rod position value of the power control rod. In an actual application, the preset load-rod position model can be obtained by training with results of multiple field experiments, and a functional model establishing a one-to-one correspondence between the actual load signal and the rod position value of the power control rod is obtained by recording rod position values of the power control rod when the nuclear power unit operates stably under different load instructions.

In an embodiment, the first feedforward information is the rod position value of the power control rod outputted by the load-rod position model, and the first feedforward information may also be referred to as rod position static feedforward information.

In this embodiment, by calculating the first feedforward information, a corresponding relationship between the power of the nuclear power unit and the heat output of the steam generator can be maintained, thereby maintaining the stability of the operating parameters of the nuclear power unit.

At step S204, second feedforward information is obtained based on the initial load signal, the actual load signal and a preset deviation intensity adjustment model.

In an embodiment, due to a certain deviation between the initial load signal and the actual load signal, when the load instruction is greatly disturbed, the rod position change of the power control rod obtained by an existing power control scheme of a nuclear power unit cannot achieve the purpose of rapidly increasing or decreasing the main steam pressure.

In this embodiment, a corresponding load signal deviation is calculated based on the initial load signal and the actual load signal, and then the load signal deviation is inputted into the preset deviation intensity adjustment model to obtain a rod position adjustment value of the power control rod complying with a deviation adjustment intensity corresponding to the actual application scenario. In an embodiment, the power rod can be moved and adjusted according to the rod position adjustment value to change the rod position value of the power rod.

In an embodiment, the preset deviation intensity adjustment model is configured to make the deviation adjustment intensity smaller when the load signal deviation is relatively small, and make the deviation adjustment intensity larger when the load signal deviation is relatively large.

For example, the corresponding relationship between the load signal deviation and the rod position adjustment value in the preset deviation intensity adjustment model is shown in Table 1.

**Table 1**

| | | | | | | | | | |
|---|---|---|---|---|---|---|---|---|---|
| Load Signal Deviation (MW) | -100 | -50 | -10 | -5 | 0 | 5 | 10 | 50 | 100 |
| Rod Position Adjustment Value (Step) | -5 | -5 | -2 | -1 | 0 | 1 | 2 | 5 | 5 |

It should be noted that in the data indicating the load signal deviation in the first row of Table 1, each specific digit indicates a deviation value between the initial load signal and the actual load signal, and the positive or negative sign before the digit is used to indicate whether the initial load signal or the actual load signal is larger. For example, the value "-100" in row 1 column 2 indicates that the actual load signal is greater than the initial load signal and that the deviation value therebetween is 100 MW. Similarly, in the data corresponding to the rod position adjustment values in the second row of Table 1, each specific digit indicates the number of steps by which the rod position is to be adjusted, and the positive or negative sign before the digit is used to indicate the direction in which the rod position needs to be adjusted. For example, the value "1" in row 1 column 7 indicates that the rod position is to be adjusted by one step in the positive direction.

It can be seen from Table 1 that when the magnitude of the load signal deviation is greater than or equal to 50 MW, that is, when the absolute value of the load signal deviation is greater than or equal to 50 MW, the magnitude of the rod position adjustment value, which is obtained by the preset deviation intensity adjustment model through processing the load deviation signal based on an adaptively matched deviation adjustment intensity, is 5 steps; and when the magnitude of the load signal deviation is 10 MW, that is, when the absolute value of the load signal deviation is 10 MW, the magnitude of the rod position adjustment value, which is obtained by the preset deviation intensity adjustment model through processing the load deviation signal based on an adaptively matched deviation adjustment intensity, is 2 steps.

In an actual application, the deviation adjustment intensity of the preset deviation intensity adjustment model can be adaptively set according to the actual application scenario, and is not limited in this embodiment.

In an embodiment, the second feedforward information is the rod position adjustment value of the power control rod output by the preset deviation intensity adjustment model, and the second feedforward information may also be referred to as the lead advance rod position feedforward information.

In this embodiment, by calculating the second feedforward information, the rod position value of the power control rod can be changed in advance, so that the rod position change of the power control rod can adapt to the deviation between the load instructions, and the purpose of rapidly increasing or decreasing the main steam pressure can be achieved.

At step S205, third feedforward information is obtained based on the actual load signal and a preset amplitude limit model.

In an embodiment, when the change rate of the actual load signal is too large, the rod position value of the power control rod will be changed significantly, resulting in the oscillations in the operating parameters of the nuclear power unit.

In this embodiment, a change rate of the actual load instruction is obtained by analyzing the dynamic change in the actual load signal, and a limited change rate of the power control rod under the dynamic change of the actual load signal is calculated based on the change rate of the actual load instruction and the preset load limit model.

It should be noted that the third feedforward information is only generated when the actual load instruction changes, and the third feedforward information is 0 when the actual load instruction does not change.

In an embodiment, a correspondence relationship between the input change rate and the output change rate of the preset amplitude limit model is shown in Table 2.

**Table 2**

| | | | | | |
|---|---|---|---|---|---|
| Input Change Rate (% FP/min) | -10 | -2 | 0 | 2 | 2 |
| Output Change Rate (% FP/min) | -2 | -2 | 0 | 2 | 2 |

In an embodiment, the preset amplitude limit model is configured to limit the amplitude of the change rate of the actual load signal.

In an embodiment, the third feedforward information is the output change rate of the preset amplitude limit model, and the third feedforward information can also be referred to as dynamic differential feedforward information.

At step S206, a power control signal is generated based on the first feedforward information, the second feedforward information, the third feedforward information, and an actual rod position value of the control rod of the reactor.

In an embodiment, the actual rod position value of the power control rod of the reactor of the nuclear power unit can be obtained by a step counter. In this embodiment, the current position of the power control rod group inserted into the reactor core is calculated by the step counter, and then processed by a corresponding inertial element, so that a stable actual rod position value can be obtained. It should be noted that a time parameter of the inertial element can be set adaptively according to the actual application scenario and is not limited herein.

In this embodiment, the coordinated control system of the nuclear power unit calculates to obtain a corresponding rod position setting value based on the first feedforward information, the second feedforward information and the third feedforward information, and then generates a corresponding power control signal based on the deviation between the actual rod position value of the power control rod of the reactor of the nuclear power unit and the rod position setting value. The coordinated control system controls the power control rod to move and adjust correspondingly according to the power control signal, so that the nuclear power unit outputs a corresponding power.

To sum up, the embodiment provides the reactor power control method including calculating the corresponding first feedforward information, the second feedforward information and the third feedforward information respectively based on the initial load signal and the actual load signal, and then generating the power control signal corresponding to the power control rod based on the first feedforward information, the second feedforward information, the third feedforward information and the actual rod position value to adjust the output power of the nuclear power unit. The method can adapt to significant and high-frequency load instruction change of the power grid and keep each operating parameter of the nuclear power unit in a stable state.

In an embodiment, as shown in FIG. 4, S203 includes:
S401, inputting the actual load signal to the preset load-rod position model; and
S402, obtaining the first feedforward information corresponding to the actual load signal via a match in the preset load-rod position model.

In an embodiment, the function of the preset load-rod position model is as described in the specific implementation of the foregoing embodiment, and is not described repeatedly herein.

In a specific application, the input parameter of the preset load-rod position model is the actual load signal, and the output parameter of the preset load-rod position model is the first feedforward information, i.e., the rod position static feedforward information.

In this embodiment, a specific function model of the preset load-rod position model is configured, so that the rod position of the power control rod can be adjusted in real time in response to the changes in the actual load instruction, and that the output power of the reactor of the nuclear power unit always corresponds to the heat output of the steam generator, thereby guaranteeing the stable performance of the operating parameters of the nuclear power unit.

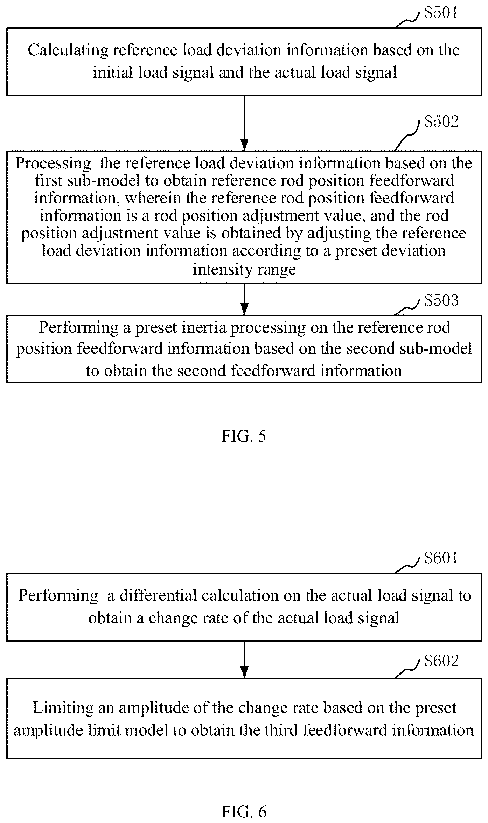

Further, in an embodiment, the preset deviation intensity adjustment model includes a first sub-model and a second sub-model. The first sub-model is configured to perform a deviation intensity adjustment, and the second sub-model is configured to perform an inertial processing. As shown in FIG. 5, step S204 can include:
S501, calculating reference load deviation information based on the initial load signal and the actual load signal;
S502, processing the reference load deviation information based on the first sub-model to obtain reference rod position feedforward information, where the reference rod position feedforward information is a rod position adjustment value obtained by adjusting the reference load deviation information according to a preset deviation intensity range; and
S503, performing a preset inertia processing on the reference rod position feedforward information based on the second sub-model to obtain the second feedforward information.

In an embodiment, a difference between the initial load signal and the actual load signal is calculated to obtain the reference load deviation information between the initial load signal and the actual load signal. The first sub-model is configured to perform a deviation intensity adjustment on the reference load deviation information according to the preset deviation intensity range, and finally obtain the reference load deviation information.

For the specific implementation process of the deviation intensity adjustment, reference may be made to the specific implementation of the foregoing embodiments, which is not described repeatedly herein.

It should be noted that the rod position adjustment value output by the first sub-model may fluctuate frequently due to the dynamic change process of the initial load signal and the actual load signal. Therefore, the preset inertia processing needs to be further performed on the reference rod position feedforward information output by the first sub-model based on the second sub-model, so as to prevent the second feedforward information from fluctuating too frequently.

In an embodiment, the second sub-model includes a first-order inertial element and a second-order inertial element. In this embodiment, the reference rod position feedforward information is processed by the first-order inertial element and the second-order inertial element, respectively, to obtain first feedforward output information through the processing by the first-order inertial element, and obtain second feedforward output information through the processing by the second-order inertial element. The first feedforward output information and the second feedforward output information collectively constitute the second feedforward information.

In an embodiment, the second-order inertial element can include two first-order inertial elements connected in series.

The first-order inertial element and the second-order inertial element are configured to delay the response of a step input and filter the initial load signal to prevent the second feedforward information from fluctuating frequently, and provide the coordinated control system with the rod position adjustment value of the corresponding power control rod when the load is greatly disturbed.

In an embodiment, as shown in FIG. 6, S205 includes:
S601, performing a differential calculation on the actual load signal to obtain a change rate of the actual load signal; and
S602, limiting the amplitude of the change rate based on the preset amplitude limit model to obtain the third feedforward information.

In an embodiment, the differential calculation is performed on the actual load signal, so that the change rate of the actual load signal can be calculated. The amplitude of the change rate, which is obtained through the differential calculation, is limited based on the preset amplitude limit model, and the third feedforward information meeting the rate change requirement can be obtained.

It should be noted that the specific differential calculation can be adaptively set according to the actual application scenario and is not limited in this embodiment.

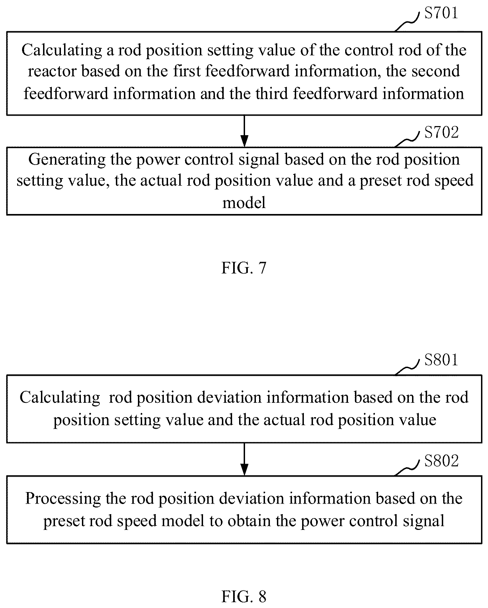

In an embodiment, as shown in FIG. 7, step S206 includes:
S701, calculating a rod position setting value of the control rod of the reactor based on the first feedforward information, the second feedforward information and the third feedforward information; and
S702, generating the power control signal based on the rod position setting value, the actual rod position value and a preset rod speed model.

In an embodiment, a sum operation is performed on the first feedforward information, the second feedforward information and the third feedforward information, and then a sum is processed by the corresponding inertial element to obtain the rod position setting value of the power control rod of the reactor of the nuclear power unit.

The preset rod speed model can calculate the rod insertion speed of the power control rod based on the difference between the rod position setting value and the actual rod position value, and the coordinated control system can generate a responsive power control signal based on the rod insertion speed of the power control rod.

In this embodiment, the preset rod speed model can be obtained by training through multiple field experiments. the input of the preset rod speed model is the difference between the rod position setting value and the actual rod position value, and the output of the preset rod speed model is the rod insertion speed of the power control rod. The correspondence relationship of the preset rod speed model is not limited in this embodiment and can be set according to an adaptive relationship between the rod insertion speed and the difference value in the actual application scenario.

In an embodiment, as shown in FIG. 8, step S702 includes:
S801, calculating rod position deviation information based on the rod position setting value and the actual rod position value; and
S802, processing the rod position deviation information based on the preset rod speed model to obtain the power control signal.

In an embodiment, according to the power control signal, a control rod drive module of the coordinated control system of the nuclear power unit drives the power control rod to move a corresponding number of steps at a corresponding rod insertion speed, completing the power rod control based on the feedforward information.

To sum up, in the reactor power control method provided by the embodiment of the application, the rod position static feedforward information, the dynamic differential feedforward information, and the lead advance rod position feedforward information, which are adapted to the initial load signal, are incorporated in the control operation of the power control rod of the reactor of the nuclear power unit, so that after the initial load signal changes, the nuclear power unit can quickly generate the power control signal adapted to the change in the initial load signal. The rod position of the power control rod is then adjusted based on the power control signal, so that the output power of the nuclear power unit quickly follows the change trend of the load value of the initial load signal, thereby rapidly adjusting the reactor power. In addition, the reactor power control method provided by the embodiment can maintain stable operating parameters of the nuclear power unit while rapidly adjusting the reactor power, thereby avoiding significant fluctuation of the main steam pressure caused by changes in turbine regulating valve opening, and effectively guaranteeing the operation stability of the PWR nuclear power unit.

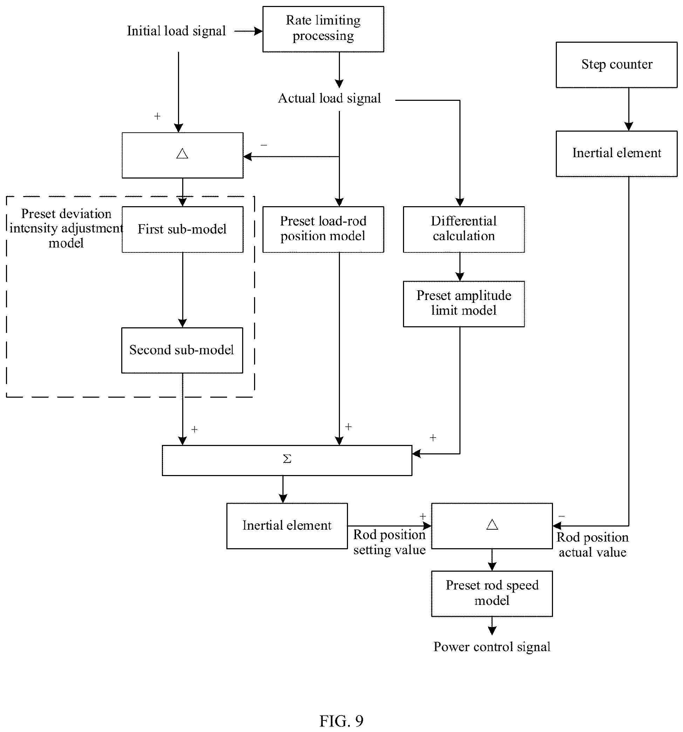

As shown in FIG. 9, in a more detailed embodiment, when a coordinated control system of a nuclear power unit receives an initial load signal sent by the power grid, a rate limiting processing is performed based on the initial load signal to obtain a corresponding actual load signal. After the actual load signal is obtained, a difference is calculated based on the initial load signal and the actual load signal to obtain reference load deviation information. The reference load deviation information is processed by a first sub-model of a preset deviation intensity adjustment model to obtain reference rod position feedforward information. After the reference rod position feedforward information is processed by a first-order inertial element and a second-order inertial element in a second sub-model of the preset deviation intensity adjustment model respectively, the corresponding second feedforward information is obtained. The second-order inertial element is composed of two first-order inertial elements. The corresponding first feedforward information can be obtained through matching the actual load signal based on the preset load-rod position model. After performing a differential calculation on the actual load signal, the change rate of the actual load signal is obtained. The change rate of the actual load signal is then processed by a preset amplitude limit model, obtaining the corresponding third feedforward information. After the first feedforward information, the second feedforward information and the third feedforward information are obtained, a sum operation is performed on the first feedforward information, the second feedforward information and the third feedforward information by an adder, and the summation result of the adder is processed by the inertial elements to calculate the corresponding rod position setting value. After the step counter collects the rod position insertion information of the power control rod, the rod position insertion information can be processed by the inertial elements to calculate the corresponding actual rod position value. Finally, the difference between the rod position setting value and the actual rod position value is processed by the preset rod speed model, obtaining the rod insertion speed of the power control rod required for generating the power control signal, and finally the corresponding power control signal is generated based on the output result of the preset rod speed model and the difference between the rod position setting value and the actual rod position value. The power rod control based on the feedforward information is performed according to the power control signal.

In an embodiment, the time parameter of each inertial element (including the inertial elements in the second sub-model) and the time parameter of the differential calculation can be adaptively set according to the requirements of the actual application scenario, and are not limited in this embodiment. In an embodiment, the time parameter of each inertial element can be set to 1, and the time parameter of the differential calculation can be set to 2.

It should be understood that although the various steps in the flowcharts involved in various aforementioned embodiments are displayed in sequence as indicated by the arrows, these steps are not necessarily performed in sequence in the order indicated by the arrows. Unless expressly stated herein, the execution of these steps is not strictly limited and may be performed in any other order. Moreover, at least a part of the steps in the flowcharts involved in various aforementioned embodiments may include a plurality of steps or a plurality of stages, which are not necessarily performed at the same moment, but may be executed at different moments, and the execution of these steps or stages is not necessarily performed sequentially, but may be performed in turn or alternately with other steps or at least a part of the steps or stages of other steps.

Based on the same inventive concept, the embodiments of the present application further provide a reactor power control apparatus for implementing the reactor power control method as described above. The problem-solving implementation schemes provided by the apparatus is similar to the implementation schemes described in the above method. Therefore, for specific limitations in one or more embodiments of the reactor power control apparatus provided below, reference may be made to the limitations of the reactor power control method described above, which are not described repeatedly herein.

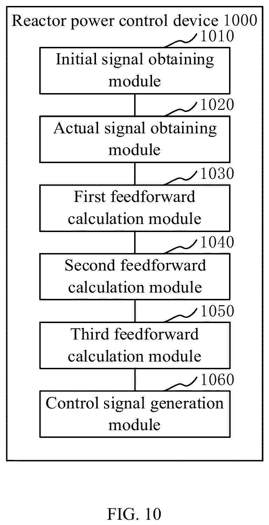

In an embodiment, as shown in FIG. 10, a reactor power control apparatus 1000 is provided and includes: an initial signal obtaining module 1010, an actual signal obtaining module 1020, a first feedforward calculation module 1030, a second feedforward calculation module 1040, a third feedforward calculation module 1050 and a control signal generation module 1060.

The initial signal obtaining module 1010 is configured to obtain an initial load signal sent by a power grid.

The actual signal obtaining module 1020 is configured to preprocess the initial load signal to obtain an actual load signal.

The first feedforward calculation module 1030 is configured to obtain first feedforward information based on the actual load signal and a preset load-rod position model.

The second feedforward calculation module 1040 is configured to obtain second feedforward information based on the initial load signal, the actual load signal and a preset deviation intensity adjustment model.

The third feedforward calculation module 1050 is configured to obtain third feedforward information based on the actual load signal and a preset amplitude limit model.

The control signal generation module 1060 is configured to generate a power control signal based on the first feedforward information, the second feedforward information, the third feedforward information, and an actual rod position value of the control rod of the reactor.

In an embodiment, the control signal generation module 1060 is specifically configured to calculate a rod position setting value of the control rod of the reactor based on the first feedforward information, the second feedforward information and the third feedforward information; and generate the power control signal according to the rod position setting value, the actual rod position value and a preset rod speed model.

In an embodiment, the control signal generation module 1060 is specifically configured to calculate rod position deviation information based on the rod position setting value and the actual rod position value; and process the rod position deviation information based on the preset rod speed model to obtain the power control signal.

In an embodiment, the actual signal obtaining module 1020 is specifically configured to perform a rate limiting processing on the initial load signal based on a preset load changing rate to obtain the actual load signal.

In an embodiment, the first feedforward calculation module 1030 is specifically configured to input the actual load signal to the preset load-rod position model; and obtain the first feedforward information corresponding to the actual load signal via a match in the preset load-rod position model.

In an embodiment, the second feedforward calculation module 1040 is specifically configured to calculate reference load deviation information based on the initial load signal and the actual load signal; process the reference load deviation information based on the preset deviation intensity adjustment model to obtain reference rod position feedforward information, where the reference rod position feedforward information is a rod position value obtained by adjusting the reference load deviation information according to a preset deviation intensity range; and perform a preset inertia processing on the reference rod position feedforward information to obtain the second feedforward information.

In an embodiment, the third feedforward calculation module 1050 is specifically configured to perform a differential calculation on the actual load signal to obtain a change rate of the actual load signal; and limit the amplitude of the change rate based on the preset amplitude limit model to obtain the third feedforward information.

To sum up, in the reactor power control apparatus provided by the embodiment of the application, the rod position static feedforward information, the dynamic differential feedforward information, and the lead advance rod position feedforward information, which are adapted to the initial load signal are incorporated in the control operation of the power control rod of the reactor of the nuclear power unit, so that after the initial load signal changes, the nuclear power unit can quickly generate the power control signal adapted to the change in the initial load signal. The rod position of the power control rod is then adjusted based on the power control signal, so that the output power of the nuclear power unit quickly follows the change trend of the load value of the initial load signal, thereby rapidly adjusting the reactor power. In addition, the reactor power control apparatus provided by the embodiment can maintain stable operating parameters of the nuclear power unit while rapidly adjusting the reactor power, thereby avoiding significant fluctuation of the main steam pressure caused by changes in steam turbine regulating valve opening, and effectively guaranteeing the operation stability of the PWR nuclear power unit.

Each module in the reactor power control apparatus above may be implemented by software, hardware, or combinations thereof, either in whole or in part. The modules above may be embedded in or independent of the processor of the computer device in the form of hardware, or may be stored in the memory of the computer device in the form of software, so that the processor may call and execute operations corresponding to the modules above.

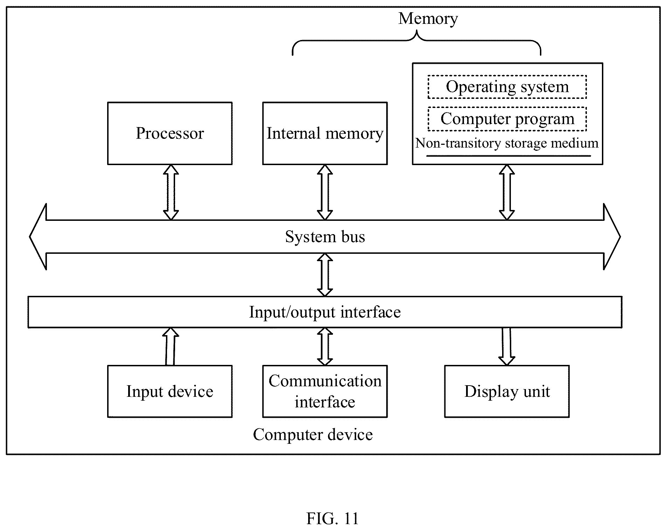

In an embodiment, a computer device is provided. The computer device may be a terminal, and the internal structure diagram may be as shown in FIG. 11. The computer device includes a processor, a memory, an input/output interface, a communication interface, a display unit, and an input device. The processor, the memory, and the input/output interface are connected through a system bus, while the communication interface, the display unit, and the input device are connected to the system bus through the input/output interface. The processor of the computer device is configured to provide computing and control capabilities. The memory of the computer device includes non-transitory storage medium and internal memory. The non-volatile storage medium stores an operating system, and computer programs. The internal memory provides an environment for the operation of the operating system and the computer programs in the non-volatile storage medium. The input/output interface of this computer device is configured for exchanging information between the processor and external devices. The communication interface of the computer device is used for wired or wireless communication with an external terminal, and the wireless communication may be realized by WIFI, mobile cellular network, NFC (Near Field Communication) or other technologies. The computer program, when executed by the processor, performs the reactor power control method. The display unit of the computer device is configured to form visually visible images, and can be a display screen, a projection device, or a virtual reality imaging device. The display screen can be a liquid crystal display screen or an electronic ink display screen. The input device of the computer device can be a touch layer covered on the display screen, or can be a button, a trackball or a touchpad arranged on the computer device casing, or can be an external keyboard, touchpad or mouse.

A person skilled in the art may understand that, the structure shown in FIG. 11 is only a block diagram of partial structure related to a solution of the present application and does not constitute a limitation on the computer device to which the solution of the present application is applied. In an embodiment, the computer device may include more or less components than those shown in the drawings, or include a combination of some components, or have different component layouts.

In an embodiment, a computer device is provided. The computer device includes a memory and a processor. A computer program is stored on the memory, and the processor, when executing the computer program, performs the following steps:
obtaining an initial load signal sent by a power grid;
preprocessing the initial load signal to obtain an actual load signal;
obtaining first feedforward information based on the actual load signal and a preset load-rod position model;
obtaining second feedforward information based on the initial load signal, the actual load signal and a preset deviation intensity adjustment model;
obtaining third feedforward information based on the actual load signal and a preset amplitude limit model; and
generating a power control signal based on the first feedforward information, the second feedforward information, the third feedforward information, and an actual rod position value of a control rod of a reactor.

In an embodiment, a computer readable storage medium is provided, and a computer program is stored on the computer readable storage medium. The computer program, when executed by a processor, performs the following steps:
obtaining an initial load signal sent by a power grid;
preprocessing the initial load signal to obtain an actual load signal;
obtaining first feedforward information based on the actual load signal and a preset load-rod position model;
obtaining second feedforward information based on the initial load signal, the actual load signal and a preset deviation intensity adjustment model;
obtaining third feedforward information based on the actual load signal and a preset amplitude limit model; and
generating a power control signal based on the first feedforward information, the second feedforward information, the third feedforward information, and an actual rod position value of a control rod of a reactor.

A person of ordinary skill in the art can understand that all or some of procedures of the method in the foregoing embodiments can be implemented by a computer program instructing relevant hardware. The computer program can be stored in a non-transitory computer readable storage medium. When the computer program is executed, the procedures of the foregoing method embodiments can be implemented. References to the memory, the database, or other medium used in the embodiments provided in the present application can all include at least one of a non-transitory or a volatile memory. The non-transitory memory can include a read-only memory (ROM), a magnetic tape, a floppy disk, a flash memory, an optical memory, a high-density embedded non-volatile memory, a resistive random-access memory (ReRAM), a magnetoresistive random access memory (MRAM), a ferroelectric random-access memory (FRAM), a phase change memory (PCM), a graphene memory, or the like. The volatile memory can include a random-access memory (RAM) or an external cache. As an illustration and not a limitation, the RAM can be in various forms, such as a static random-access memory (SRAM) or a dynamic random-access memory (DRAM). The database involved in the various embodiments provided in the present application can include at least one of a relational database and a non-relational database. The non-relational database can include a blockchain-based distributed database or the like, but is not limited thereto. The processors involved in the various embodiments provided by the present application can be general-purpose processors, central processing units, graphics processors, digital signal processors, programmable logic devices, data processing logic devices based on quantum computing, and are not limited thereto.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements may be made without departing from the concept of the present application, and all these modifications and improvements belong to the protection scope of the present application. Therefore, the scope of protection of the patent application should be subject to the appended claims.

## Claims

1. A reactor power control method, comprising:
obtaining an initial load signal sent by a power grid;
preprocessing the initial load signal to obtain an actual load signal;
obtaining first feedforward information based on the actual load signal and a preset load-rod position model;
obtaining second feedforward information based on the initial load signal, the actual load signal and a preset deviation intensity adjustment model;
obtaining third feedforward information based on the actual load signal and a preset amplitude limit model; and
generating a power control signal based on the first feedforward information, the second feedforward information, the third feedforward information, and an actual rod position value of a control rod of a reactor.

2. The method according to claim 1, wherein generating the power control signal based on the first feedforward information, the second feedforward information, the third feedforward information, and the actual rod position value of the control rod of the reactor comprises:
calculating a rod position setting value of the control rod of the reactor based on the first feedforward information, the second feedforward information and the third feedforward information; and
generating the power control signal based on the rod position setting value, the actual rod position value and a preset rod speed model.

3. The method according to claim 2, wherein generating the power control signal based on the rod position setting value, the actual rod position value and the preset rod speed model comprises:
calculating rod position deviation information based on the rod position setting value and the actual rod position value; and
processing the rod position deviation information based on the preset rod speed model to obtain the power control signal.

4. The method according to claim 1, wherein preprocessing the initial load signal to obtain the actual load signal comprises:
performing a rate limiting processing on the initial load signal based on a preset load changing rate to obtain the actual load signal.

5. The method according to any one of claims 1 to 4, wherein obtaining the first feedforward information based on the actual load signal and the preset load-rod position model comprises:
inputting the actual load signal to the preset load-rod position model; and
obtaining the first feedforward information corresponding to the actual load signal via a match in the preset load-rod position model.

6. The method according to any one of claims 1 to 4, wherein the preset deviation intensity adjustment model comprises a first sub-model and a second sub-model, and obtaining the second feedforward information based on the initial load signal, the actual load signal and the preset deviation intensity adjustment model comprises:
calculating reference load deviation information based on the initial load signal and the actual load signal;
processing the reference load deviation information based on the first sub-model to obtain reference rod position feedforward information, wherein the reference rod position feedforward information is a rod position adjustment value, and the rod position adjustment value is obtained by adjusting the reference load deviation information according to a preset deviation intensity range; and
performing a preset inertia processing on the reference rod position feedforward information based on the second sub-model to obtain the second feedforward information.

7. The method according to any one of claims 1 to 4, wherein obtaining the third feedforward information based on the actual load signal and the preset amplitude limit model comprises:
performing a differential calculation on the actual load signal to obtain a change rate of the actual load signal; and
limiting an amplitude of the change rate based on the preset amplitude limit model to obtain the third feedforward information.

8. A reactor power control apparatus, comprising:
an initial signal obtaining module configured to obtain an initial load signal sent by a power grid;
an actual signal obtaining module configured to preprocess the initial load signal to obtain an actual load signal;
a first feedforward calculation module configured to obtain first feedforward information based on the actual load signal and a preset load-rod position model;
a second feedforward calculation module configured to obtain second feedforward information based on the initial load signal, the actual load signal and a preset deviation intensity adjustment model;
a third feedforward calculation module configured to obtain third feedforward information according to the actual load signal and a preset amplitude limit model; and
a control signal generation module configured to generate a power control signal according to the first feedforward information, the second feedforward information, the third feedforward information, and an actual rod position value of a control rod of a reactor.

9. A computer device, comprising a memory and a processor, wherein the memory has a computer program stored thereon, and the processor, when executing the computer program, performs steps of the reactor power control method according to any one of claims 1 to 7.

10. A computer readable storage medium, having a computer program stored thereon, wherein the computer program, when executed by a processor, performs steps of the reactor power control method according to any one of claims 1 to 7.
